# EUROPÄISCHE PATENTSCHRIFT

(11) **EP 1 459 698 B1**
(45) Veröffentlichungstag und Bekanntmachung des Hinweises auf die Patenterteilung: **21.12.2005**
(21) Anmeldenummer: 04405152.2
(22) Anmeldetag: 15.03.2004
(51) Int. Cl.: A61C 5/14

(54) **Wangen-und Lippenabhalter für die Dentalmedizin**
Cheek and lip retractor for dentistry
Rétracteur de lèvres et de joues pour la dentisterie

(30) Priorität: 17.03.2003 CH 4322003
(43) Veröffentlichungstag der Anmeldung: 22.09.2004
(73) Patentinhaber: Kerrhawe SA, 6934 Bioggio (CH)
(72) Erfinder: Kilcher, Beat, 6935 Bosco Luganese (CH); Quarry, Anthony, 6987 Caslano (CH)
(74) Vertreter: Seehof, Michel

(56) Entgegenhaltungen:
- WO-A-02/07636
- DE-B- 1 293 947
- DE-C- 444 924
- DE-C- 828 286
- DE-C- 828 287
- US-A- 4 053 984

## Beschreibung

Die vorliegende Erfindung bezieht sich auf einen Wangen- und Lippenabhalter für die Dentalmedizin gemäss Oberbegriff von Patentanspruch 1 und dient dazu, bei Behandlungen in der Mundhöhle und im Speziellen an den Zähnen im Bereich des Operationsgebietes Weichgewebe abzuhalten.

Ein Halter gemäss Oberbegriff ist aus der US-A-4 053 984 bekannt, wobei dieser Halter im Wesentlichen aus einem U-förmig gebogenen Stück besteht, an dessen beiden Enden Lippenschilder angebracht sind, und die Wangen durch die U-Schenkel gespreizt werden. Durch diese Anordnung werden die Lippen im Bereich der Mundwinkel wie mit einem steifen Haken angegriffen, wodurch es dem Behandler nicht mehr möglich ist, den Mundwinkel zusätzlich wegzudrücken, falls dies nötig ist. Ausserdem ist der Zugang zum angrenzenden Zahnfleisch ungenügend.

Es sind noch weitere Abhalter bekannt, die die oben erwähnten Nachteile ebenfalls aufweisen, wobei bei Spreizung der Lippen in horizontaler Richtung die Spannung der Lippen so gross ist, dass dies für den Patienten unangenehm und auf Dauer schmerzhaft ist. Ferner bieten die bekannten Abhalter im Bereich der Frontzähne keinen genügenden Zugang zu den zu behandelnden Flächen.

Es ist von diesem bekannten Stand der Technik ausgehend Aufgabe der vorliegenden Erfindung, einen Wangen- und Lippenabhalter anzugeben, der die oben beschriebenen Nachteile nicht aufweist und mit welchem es möglich ist, die Lippen derart zu spreizen, dass der freie Zugang zu den zu behandelnden Stellen gewährleistet ist und der derart ausgebildet ist, dass auch ein langes Tragen des Abhalters für den Patienten nicht unkomfortabel oder gar schmerzhaft ist.

Ein solcher Wangen- und Lippenabhalter ist in Anspruch 1 definiert. Weitere Ausbildungen und Vorteile ergeben sich aus den abhängigen Ansprüchen.

Die Erfindung soll im Folgenden anhand eines Ausführungsbeispiels näher erläutert werden.
- Fig. 1: einen erfindungsgemässen Abhalter in Hintenansicht,
- Fig. 2: zeigt den Halter von Fig. 1 in Seitenansicht,
- Fig. 3: zeigt ein Detail in vergrösserter Form, und
- Fig. 4: zeigt den Halter von Fig. 1 in der Vorderansicht,

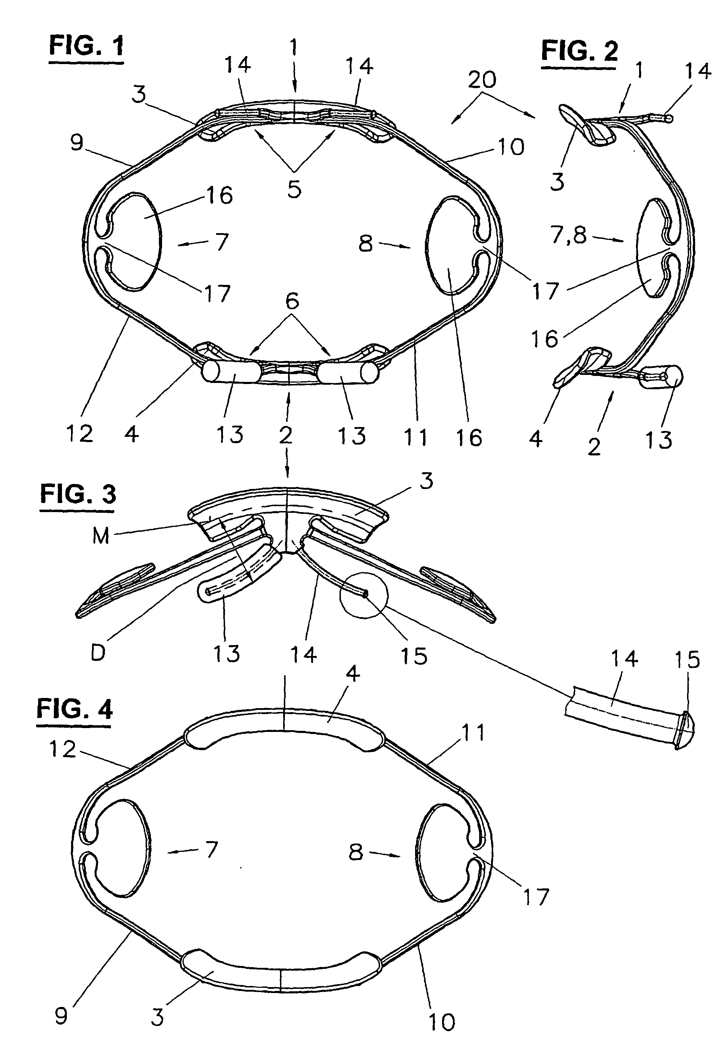

Figur 1 zeigt den Halter 20 in Hintenansicht mit den beiden Lippenteilen 1 und 2, die mit je einem Lippenschild 3, bzw. 4 und Schleimhautpolster 5, bzw. 6 versehen sind sowie die beiden Wangenteile 7 und 8. Die Lippen- und Wangenteile liegen in einer etwas gekrümmten Ebene und sind über biegsame Verbindungselemente 9, 10, 11, 12 miteinander verbunden.

Aus Figur 3 ist ersichtlich, dass die Schleimhautpolster jeweils paarweise angeordnete Rollen 13 aufweisen, die z.B. aus Silikon beschaffen sein können oder aus einem anderen, geeigneten Material und die innen hohl sind, um auf flexible Halter 14 aufgesteckt zu werden. Dadurch ist es möglich, Rollen mit unterschiedlichen Durchmessern vorzusehen, um eine gute Anpassung des Abhalters zu gewährleisten und eine leichte Reinigung bzw. Sterilisierung zu ermöglichen. Am Ende des Halters 14 ist eine Verdickung 15 vorgesehen, die der Rolle einen guten Rückhalt gibt.

Insbesondere aus Figur 3 ist ersichtlich, dass die Schleimhautpolster und das Lippenschild voneinander getrennt und senkrecht zur Ebene der Verbindungselemente voneinander beabstandet sind. Die Verbindungselemente sind jeweils etwa in der Mitte zwischen Schleimhautpolster, Schleimhaut und dem Lippenschild angeordnet. Der Abstand zwischen der Auflage des Schleimhautpolsters auf der Schleimhaut und der Mittellinie M des Lippenschildes beträgt D. Dieser Abstand kann 10 mm bis 30 mm betragen. Dadurch werden die Lippen derart von den Zähnen abgehoben, dass eine freie Bearbeitung der Zähne und des Zahnfleisches möglich ist.

Das Lippenschild ist anatomisch geformt und ausgebildet, verschiedene Lippenformen aufzunehmen und ist ausserdem derart gekrümmt, dass verhindert wird, dass die Lippe hinausgedrückt wird.

Das Wangenteil ist flexibel ausgebildet und enthält eine gekrümmte Fläche 16, die über einen flexiblen Steg 17 mit den Verbindungselementen verbunden ist. Dadurch werden die Wangen von den Zähnen und der Schleimhaut ferngehalten und die gekrümmten, flexiblen Flächen ergeben einen hohen Komfort.

Der horizontale Abstand zwischen den Wangenteilen sowie deren Abmessungen sind derart gewählt, dass diese nicht den Bereich der Mundwinkel versperren, und die flexiblen Verbindungselemente ermöglichen es dem Zahnarzt, die Mundwinkel mehr auseinander zu pressen, falls es dies für bestimmte Arbeiten erfordert. Dabei führen die Lippenteile beim Schliessen des Mundes eine im wesentlichen translatorische Bewegung aus. Die flexiblen Verbindungselemente unterstützen einerseits die Bestrebung, den Mund geöffnet zu halten, wodurch auch bei langen Arbeiten der Abhalter nicht unbequem wird, ermöglicht jedoch andererseits das Arbeiten bei geschlossenem Mund.

Der ganze Abhalter, bis auf die Schleimhautrollen, kann einstückig hergestellt werden. Falls eine Mehrfachverwendung vorgesehen ist, haben sich Kunststoffe als geeignet erwiesen, die unter der Bezeichnung "PEEK" und "PPSU" im Handel sind, oder z. B. "PC" für Einmalgebrauchsartikel.

Das Versehen der Lippenteile mit Schleimhautpolster und die Ausbildung der Wangenteile als flexible Flächen ergeben ein bevorzugtes Ausführungsbeispiel, das für den Patienten einen hohen Tragkomfort bedeutet und dem Zahnarzt eine optimale Bearbeitung gewährleistet.

## Patentansprüche

1. Wangen- und Lippenabhalter für die Dentalmedizin, mit je einem Wangenteil (7, 8) und einem Lippenteil (1, 2) für die Ober- und Unterlippe, wobei jedes Lippenteil ein Lippenschild (3, 4) aufweist und die Wangenteile und Lippenteile durch flexible Verbindungselemente (9-12) miteinander verbunden sind, **dadurch gekennzeichnet, dass** die Lippenschilder (3, 4) davon getrennte und beabstandete Schleimhautpolster (5, 6) aufweisen und die Verbindungselemente (9-12) zwischen Lippenschild und Schleimhautpolster angeordnet sind.

2. Abhalter nach Anspruch 1, **dadurch gekennzeichnet, dass** die Lippen- und Wangenteile (1, 2; 7, 8) sowie die Verbindungselemente (9-12) in einer gekrümmten Ebene liegen

3. Abhalter nach Anspruch 1 oder 2, **dadurch gekennzeichnet, dass** die Auflage der Schleimhautpolster (13) auf der Schleimhaut und die Mittellinie (M) des Lippenschildes (3) einen Abstand (D) aufweisen.

4. Abhalter nach Anspruch 3, **dadurch gekennzeichnet, dass** der Abstand 10 mm bis 30 mm beträgt.

5. Abhalter nach einem der Ansprüche 1 bis 4, **dadurch gekennzeichnet, dass** das Schleimhautpolster (5, 6) ein Paar Rollen (13) enthält, die auf je einem Halter (14) am Lippenteil (1, 2) aufsteckbar sind.

6. Abhalter nach einem der Ansprüche 1 bis 5, **dadurch gekennzeichnet, dass** die Wangenteile (7, 8) als flexible Flächen (16) ausgebildet sind, die über je einen flexiblen Steg (17) mit den Verbindungselementen (9-12) verbunden sind. i

7. Abhalter nach einem der Ansprüche 1 bis 6, **dadurch gekennzeichnet, dass** die Verbindungselemente (9-12) derart angeordnet und gestaltet sind, dass im verwendeten Zustand die Lippenteile (1, 2) beim Schliessen des Mundes eine im wesentlichen translatorische Bewegung ausführen.

## Claims

1. Cheek and lip retractor for dentistry, comprising respective cheek portions (7, 8) and respective lip portions (1, 2) for the upper and lower lip, each lip portion comprising a lip shield (3, 4) and the cheek portions and lip portions being connected to each other by flexible connecting elements (9-12), **characterised in that** the lip shields (3, 4) are provided with mucosa pads (5, 6) that are separated and distanced therefrom, and that the connecting elements (9-12) are arranged between lip shield and mucosa pad.

2. Retractor according to claim 1, **characterised in that** the lip and cheek portions (1, 2; 7, 8) as well as the connecting elements (9-12) are arranged in a curved plane.

3. Retractor according to claim 1 or 2, **characterised in that** the contact point of the mucosa pads (13) on the mucous membrane and the median line (M) of the lip shield (3) are located at a distance (D) from each other.

4. Retractor according to claim 3, **characterised in that** the distance is comprised between 10 mm and 30 mm.

5. Retractor according to one of claims 1 to 4, **characterised in that** the mucosa pad (5, 6) comprises a pair of rolls (13) that are attachable to a holder (14) on the lip portion (1, 2).

6. Retractor according to one of claims 1 to 5, **characterised in that** the cheek portions (7, 8) are designed as flexible surfaces (16) that are connected to the connecting elements (9-12) by respective flexible ligaments (17).

7. Retractor according to one of claims 1 to 6, **characterised in that** the connecting elements (9-12) are arranged and designed such that the lip portions (1, 2) perform an essentially translational movement when closing one's mouth during use.

## Revendications

1. Ecarteur jugal et labial pour la médecine dentaire, comprenant des parties jugales (7, 8) respectives et des parties labiales (1, 2) respectives pour la lèvre supérieure et inférieure, chaque partie labiale comportant un volet labial (3, 4) et les parties jugales et labiales étant reliées entre elles par des éléments de liaison (9-12), **caractérisé en ce que** les volets labiaux (3, 4) sont munis de supports rembourrés (5, 6) séparés et distancés des volets, et que les éléments de liaison (9-12) sont agencés entre volet labial et support rembourré.

2. Ecarteur selon la revendication 1, **caractérisé en ce que** les parties labiales et jugales (1, 2; 7, 8) ainsi que les éléments de liaison (9-12) sont arrangés dans un plan courbé.

3. Ecarteur selon la revendication 1 ou 2, **caractérisé en ce que** le point de contact des supports rembourrés (13) sur la muqueuse et la ligne médiane (M) du volet labial (3) se trouvent à une distance (D).

4. Ecarteur selon la revendication 3, **caractérisé en ce que** ladite distance est comprise entre 10 mm et 30 mm.

5. Ecarteur selon l'une des revendications 1 à 4, **caractérisé en ce que** le support rembourré (5, 6) comporte une paire de rouleaux (13) attachables sur un support (14) respectif agencé sur la partie labiale (1, 2).

6. Ecarteur selon l'une des revendications 1 à 5, **caractérisé en ce que** les parties jugales (7, 8) sont réalisées en forme de surfaces flexibles (16) qui sont reliées chaque fois aux éléments de liaison (9-12) par un pont flexible (17).

7. Ecarteur selon l'une des revendications 1 à 6, **caractérisé en ce que** les éléments de liaison (9-12) sont agencés et conformés de telle manière que pendant l'utilisation, les parties labiales (1, 2) effectuent un mouvement essentiellement translatoire lorsque le patient ferme la bouche.
